# EUROPEAN PATENT SPECIFICATION

(11) **EP 1 745 351 B1**
(45) Date of publication and mention of the grant of the patent: **13.07.2011**
(21) Application number: 05731771.1
(22) Date of filing: 26.04.2005
(51) Int. Cl.: G06F 3/033, G01P 3/36

(54) **AN OPTICAL INPUT DEVICE AND METHOD OF MEASURING RELATIVE MOVEMENT OF AN OBJECT AND AN OPTICAL INPUT DEVICE**
OPTISCHE EINGABEEINRICHTUNG UND VERFAHREN ZUR MESSUNG DER RELATIVBEWEGUNG EINES OBJEKTS UND EINER OPTISCHEN EINGABEEINRICHTUNG
DISPOSITIF D'ENTREE OPTIQUE ET PROCEDE DE MESURE DU DEPLACEMENT RELATIF D'UN OBJET ET DISPOSITIF D'ENTREE OPTIQUE

(30) Priority: 29.04.2004 EP 04101833
(43) Date of publication of application: 24.01.2007
(73) Proprietor: Koninklijke Philips Electronics N.V., 5621 BA Eindhoven (NL)
(72) Inventor: ZIJP, Ferry, NL-5656 AA Eindhoven (NL)
(74) Representative: Bekkers, Joost J.J
(86) International application number: PCT/IB2005/051361
(87) International publication number: WO 2005/106635

(56) References cited:
- DE-A1- 10 127 023
- US-A- 6 122 394
- US-A1- 2002 104 957
- US-B1- 6 195 448
- US-B1- 6 417 840

## Description

This invention relates to a relative movement sensor for use, for example, in an optical input device, for measuring movement of an object (for example, a user's finger) and the sensor relative to each other. The sensor comprising at least one laser, having a laser cavity, for generating a measuring beam and illuminating an object therewith, wherein at least some of the measuring beam radiation reflected by the object re-enters the laser cavity, wherein measuring means are provided for measuring changes in operation of the laser cavity caused by interference reflected measuring beam radiation re-entering the laser cavity and the optical wave in that cavity.

The invention also relates to a method of manufacturing such a sensor, an optical input device including such a sensor, and a method of measuring movement of an object and such a sensor relative to each other.

An optical input including a relative movement sensor as defined is known from International Patent Application WO 02/37410 A1 (Koninklijke Philips Electronics N.V.) 10 May 2002, which describes a method of measuring the relative movement of an input device and an object, for example, a human finger or other object, which method uses a so-called self-mixing effect in a diode laser. This is the phenomenon that radiation emitted by a diode laser and re-entering the cavity of the diode laser induces a variation in the gain of the laser and thus in the radiation emitted from the laser. Radiation emitted by a diode laser is focussed through, for example, a plastic lens on an external object (e.g. a fingertip). The light scatters and a small part re-enters the cavity of the laser. Here, the light that is cattered mixes coherently with the light inside the cavity, which changes the gain and frequency of the laser. This self-mixing can be detected and converted to represent the direction and speed of a moving object such as a fingertip.

The optical input device of International Patent Application WO 02/37410 A1 comprises a transparent window through which the object, such as a human finger, is illuminated. It will be appreciated that, under some circumstances, at least some of the laser light will be visible to a user through the transparent window when there is no object between the transparent window and the user's line of sight, and it is known that laser light can be harmful to a user's eyes. Therefore, there may at least be a perception by the user that the laser light visible through the transparent window may be harmful to their eyes.

It is an object of the present invention to overcome the above-mentioned problem, and provide a relative movement sensor which is less likely to cause a user harm or to have a perception that the laser light used therein is harmful to them.

In accordance with a first aspect of the present invention, there is provided a relative movement sensor for measuring movement of an object and the sensor relative to each other, the sensor comprising a transparent window and at least one laser, having a laser cavity, for generating a measuring beam and illuminating an object therewith through the transparent window when the object is in contact with a surface of the transparent window, wherein at least some of the measuring beam radiation reflected by the object re-enters the laser cavity, the apparatus further comprising measuring means for measuring changes in operation of the laser cavity caused by interference of reflected measuring beam radiation re-entering the laser cavity and the optical wave in the laser cavity, wherein the angle of incidence of the measuring beam on the transparent window and/or the refractive index of the transparent window are such as to cause a significant proportion of the measuring beam radiation incident on the transparent window to be substantially totally internally reflected thereby in the absence of an object in contact therewith.

The first aspect of the present invention also extends to an optical input device including such a sensor, a method of measuring movement of an object and such a sensor relative to each other, and a method of manufacturing such a sensor including the step of selecting the angle of incidence of the measuring beam on the transparent window and/or the refractive index of the transparent window so as to cause a significant proportion of the measuring beam radiation incident on the inner surface of the transparent window to be substantially totally internally reflected thereby in the absence of any object in contact therewith.

It will be appreciated that, in the case where a focused beam is used as the measuring beam, this measuring beam impinges on the surface of the window with a (finite) range of angles, due to the focusing action. Thus, in this case, the measuring beam would be constituted by more than one ray.

Beneficially, the angle of incidence of the measuring beam, or at least a significant proportion of the rays constituting such a beam, and/or the refractive index of the transparent window, are selected such that at least 50%, and more preferably 90%, of the radiation incident on the transparent window is reflected back therefrom. In one preferred exemplary embodiment, the measuring beam incident on the transparent window is substantially totally internally reflected thereby in the absence of an object in contact therewith. It will be appreciated by a person skilled in the art that, for example, substantially the same benefit can be achieved if the angle of incidence of the measuring beam on the transparent window, and/or the refractive index of the transparent window are selected such that, say, 90% or more of the radiation incident on the transparent window is reflected thereby and only less than 10% of the incident radiation is actually permitted to pass therethrough. In this case, where the measuring beam is constituted by a number of rays of radiation at a range of angles, all but one or two of those angles (for example) may be such as to effect substantially total internal reflection of the respective rays by the transparent window, and then only some predetermined percentage of the above-mentioned one or two rays may be allowed to pass through the transparent window, the remaining portion thereof also being reflected back. The manner in which the angle(s) of incidence and/or the refractive index of the transparent window can be selected to achieve the desired result will be apparent to a person skilled in the art.

In a preferred embodiment, the angle of incidence of the measuring beam (α) on the transparent window is such that sin(α)>1/nₗₑₙₛ, where nₗₑₙₛ, is the refractive index of the transparent window.

The angle of incidence of the measuring beam (or a significant proportion of the rays constituting the measuring beam) on the transparent window may be at least partially set by the location of the laser relative to the transparent window, and/or the area of the laser from which the laser light is emitted. The angle of incidence of the measuring beam on the transparent window may be at least partially controlled by one or more reflective elements, such as mirrors, located in the radiation path of the measuring beam; one or more refractive elements located in the radiation path of the measuring beam; one or more diffractive elements, such as diffraction gratings, located in the radiation path of the measuring beam; and/or one or more wave guiding elements, such as focussing grating couplers, located in the radiation path of the measuring beam.

The sensor may further comprise optical means for converging the measuring beam (or a significant proportion of the rays constituting it) in an action plane, wherein the upper surface of the transparent window is convex in at least one of two mutually perpendicular directions in the action plane on top of the transparent window. The advantage of this feature is that if the window has a convex surface shape in at least one direction, it can be kept clean, especially in its central part where the measuring beam passes. In addition, the window is tangible so that it can be more easily found by the user, even in the dark.

It is another object of the present invention, to utilize the laser light employed in the relative movement sensor for another purpose, particularly in the case of a portable optical device wherein it is crucial to minimize the size of the overall unit to promote its portability.

Thus, in accordance with a second aspect of the present invention, there is provided a portable optical device comprising a relative movement sensor for measuring movement of an object and the sensor relative to each other, the sensor comprising a first transparent window and at least one laser, having a laser cavity, for generating a measuring beam and illuminating an object therewith through the transparent window, wherein at least some of the measuring beam radiation reflected by the object re-enters the laser cavity, the sensor further comprising measuring means for measuring changes in operation of the laser cavity caused by interference of reflected measuring beam radiation re-entering the laser cavity, the device further comprising a second transparent window, and means for causing at least a portion of the measuring beam to be output from the device through the second transparent window.

The light being output through the second transparent window may, for example, provide a laser pointing function, or enable the projection of messages or images from said device using diffractive patterns in the beam.

The device may comprise beam-splitting means for causing some of the measuring beam to be directed toward the first transparent window and some of the measuring beam to be directed toward the second transparent window.

Alternatively, at least a portion of the measuring beam reflected by the first transparent window may be directed toward the second transparent window for output therethrough. The angle of incidence of the measuring beam on the first transparent window and/or the refractive index of said first transparent window may be such as to cause the measuring beam radiation incident on the first transparent window to be substantially totally internally reflected thereby in the absence of an object in contact therewith, following which total internal reflection, the measuring beam is directed toward the second transparent window. The at least a portion of the measuring beam may be directed toward the second transparent window via collimating means, following reflection thereof by the first transparent window. In one embodiment, the angle of incidence α of the measuring beam on the first transparent window is beneficially such that sin(α)>1/nₗₑₙₛ, where mₗₑₙₛ is the refractive index of the first transparent window, so as to effect the above-mentioned substantial total internal reflection of the measuring beam by the first transparent window.

The measuring beam may comprise infra-red laser light, or it may comprise, for example, blue or green laser light so as to enhance the visual effect of the laser pointing function.

These and other aspects of the present invention will be apparent from, and elucidated with reference to the embodiments described herein.

Embodiments of the present invention will now be described by way of examples only and with reference to the accompanying drawings, in which:
Fig. 1a is a schematic cross-sectional view of an optical input device of the type described in International Patent Application No. 02/37410, to illustrate the principle of operation of an optical input device according to an exemplary embodiment of the present invention;
Fig. 1b is a plan view of the device of Figure 1a;
Fig. 2 is a schematic cross-sectional view of a relative movement sensor in accordance with a first exemplary embodiment of the present invention;
Fig. 3 is a schematic cross-sectional view of a relative movement sensor in accordance with a second exemplary embodiment of the present invention;
Fig. 4 is a schematic cross-sectional view of a relative movement sensor in accordance with a third exemplary embodiment of the present invention;
Fig. 5 is a schematic cross-sectional view of a relative movement sensor according to a fourth exemplary embodiment of the present invention;
Fig. 5a is a schematic perspective view of the principal of operation of a planar wave guide focusing grating coupler used in the embodiment illustrated in Figure 5 of the drawings;
Fig. 6 is a schematic cross-sectional view of a portable optical device according to a first exemplary embodiment of a second aspect of the present invention; and
Fig. 7 is a schematic cross-sectional view of a portable optical device according to a second exemplary embodiment of a second aspect of the present invention.

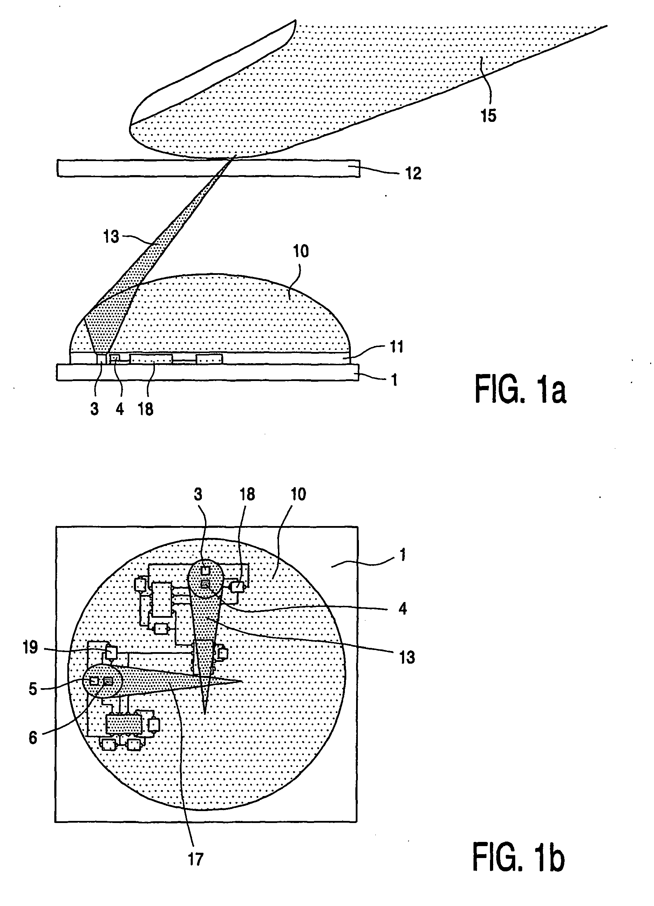

Figure 1 is a diagrammatic cross-section of an optical input device comprising, at its lower side, a base plate 1, which is a carrier for the diode lasers, which may be lasers of the Vertical Cavity Surface Emitting Laser (VCSEL) type, and the detectors, for example, photo diodes. In Figure 1a only one diode laser 3 and its associated photo diode is visible, but usually at least a second diode laser 5 and associated detector 6 is provided on the base plate 1, as shown in Figure 1b of the drawings. The diode lasers 3, 5 emit laser, or measuring, beams 13 and 17 respectively. At its upper side, the device is provided with a transparent window (e.g. plastic lens) 12 across which an external object 15, for example, a human fingertip is to be moved. A lens 10, for example, a plano-convex lens is arranged between the diode lasers and the window. This lens focuses the laser beams 13, 17 at or near the upper side of the transparent window. If an object 15 is present at this position, it scatters the beam 13, 17. A part of the radiation of beam 13, 17 is scattered in the direction of the illumination beam 13, 17 and this part is converged by the lens 10 on the emitting surface of the diode laser 3, 5 and re-enters the cavity of this laser. The radiation re-entering the cavity induces a variation in the gain of the laser and thus in the radiation emitted by the laser. This phenomenon will also be ferred to herein as the so-called self-mixing effect in a diode laser.

The finger and the input device are moved relative to each other such that the direction of movement has a component in the direction of the laser beam. Upon movement of the finger and the input device, the radiation scattered by the object gets a frequency different from the frequency of the radiation illuminating the object, because of the Doppler effect. Part of the scattered light is focused on the diode laser by the same lens that focuses the illumination beam on the finger. Because some of the scattered radiation enters the laser cavity through the laser mirror, interference of light takes place in the laser. This gives rise to fundamental changes in the properties of the laser and the emitted radiation. Parameters, which change due to the self-coupling effect, are the power, the frequency and the line width of the laser radiation and the laser threshold gain. The result of the interference in the laser cavity is a fluctuation of the values of these parameters with a frequency that is equal to the difference of the two radiation frequencies. This difference is proportional to the velocity of the fingertip. Thus, the velocity of the fingertip and, by integrating over time, the displacement of the fingertip, can be determined by measuring the value of one of the above-mentioned parameters.

The change of intensity of the laser radiation emitted by the diode laser as a result of relative movement between the fingertip and the input device can be detected by the photo diode 4, 6, which converts the radiation variation into an electric signal, and electronic circuitry 18, 19 is provided for processing this electric signal.

The principle of the relative movement sensor and method of measuring relative movement employed in the present invention is described in further detail in International Patent Application WO 02/37410A1, and will not be described in any further detail herein.

The optical input device described in International Patent Application No. 02/37410 may be employed, for example, as a compact, laser-based scrolling device or integrated optical micro-mouse without mechanical moving parts in mobile telephones, Personal Digital Assistants (PDA's) and the like. However, in current designs, focussed coherent laser beam radiation may radiate out of the device housing (through the transparent window) and this radiation, depending on the laser power (which, in respect of one known device, might typically be around 1mW), creates either a real potential danger to the human eye or an unrealistic "presumed" (by users and/or relevant authorities) danger to the eye.

As indicated above, a first aspect of the present invention relates to a relative movement sensor, wherein the angle of incidence of the measuring beam on the transparent window and/or the refractive index of the transparent window are such as to cause the measuring beam incident on the transparent window to be substantially totally internally reflected thereby in the absence of an object in contact therewith.

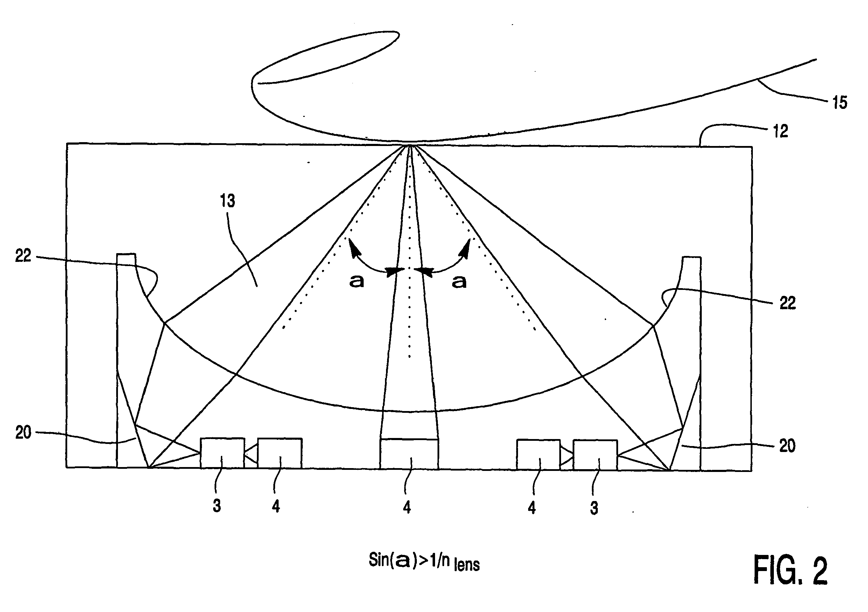

This may be achieved, in accordance with this exemplary embodiment of the present invention, by increasing the angle at which light is focussed on the transparent window to a value above a critical angle α, as illustrated schematically in Figure 2 of the drawings. At such a high angle of incidence, substantial total internal reflection (TIR) will occur at the interface between the (e.g. plastic) transparent window 12, which will prevent the light from propagating out of the housing when the window 12 is not in contact with a fingertip 15 or other object. This total internal reflection will stop when a fingertip 15 or other object touches the window 12 because the refractive index of skin tissue is relatively close to that of the window (n∼1.4). In other words, the introduction of a fingertip or other object in contact with the transparent window, creates so-called frustrated TIR which is caused by a change in refractive index at the window/fingertip interface (compared with that of the window/air interface), such that light still scatters when a fingertip is in contact with the window, and a detectable signal is still generated and the principal of operation remains unchanged without the potential danger of laser light being emitted from the housing of the device.

In addition to the prevention of escape of any laser light from the device, the increased angle of incidence of the measuring beam has the additional advantage of enabling the design to be made very compact.

In a preferred embodiment, the angle of incidence V of the measuring beam hitting the transparent window 12 is set such that sin(∀)>1/nₗₑₙₛ, where nₗₑₙₛ is the refractive index of the transparent window 12. In the exemplary embodiment of the present invention illustrated in Figure 2 of the drawings, this is achieved by the provision of a mirror 20 and a refractive lens 22 in the radiation path of the measuring beam 13. However, it will be apparent to a person skilled in the art that many different designs for achieving the desired effect are possible, which designs may be obtained using, for example, known software for optimizing a merit function of an optical device, such as ZEMAX (RTM) or the like.

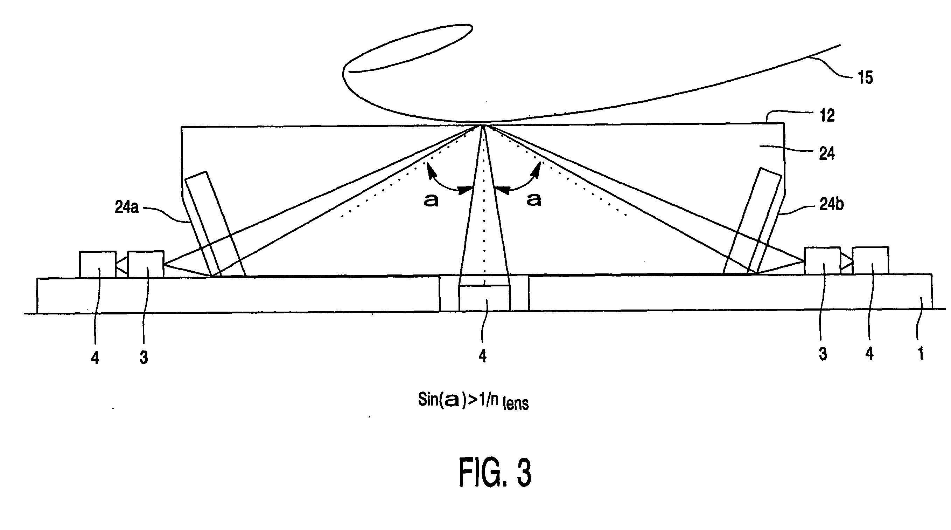

For example, in the exemplary device illustrated schematically in Figure 3 of the drawings, instead of the mirror 20 and the refractive lens 22, only a refractive lens 24, having lens surface 24a and 24b, is required to create a measuring beam 13 having an angle of incidence V on the transparent window 12 such that sin(α)>1/nₗₑₙₛ.

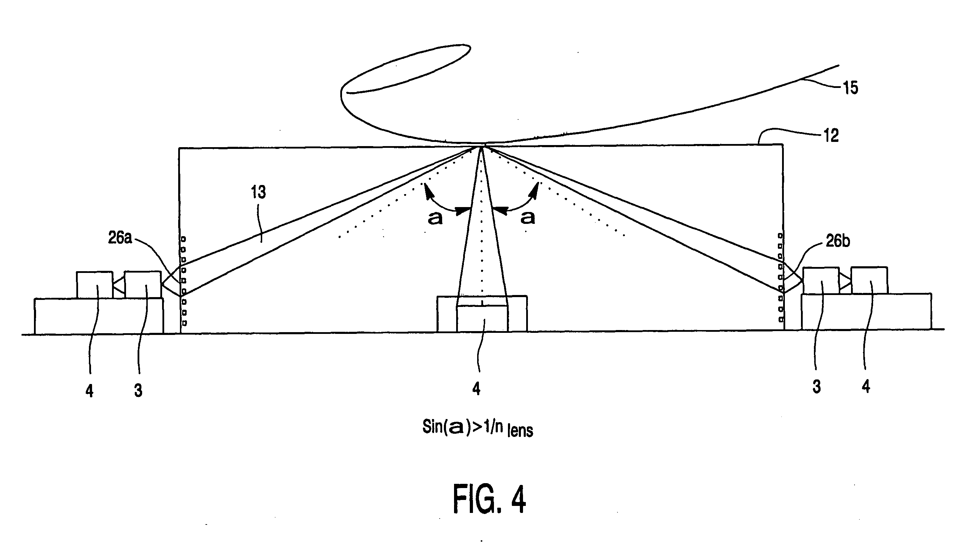

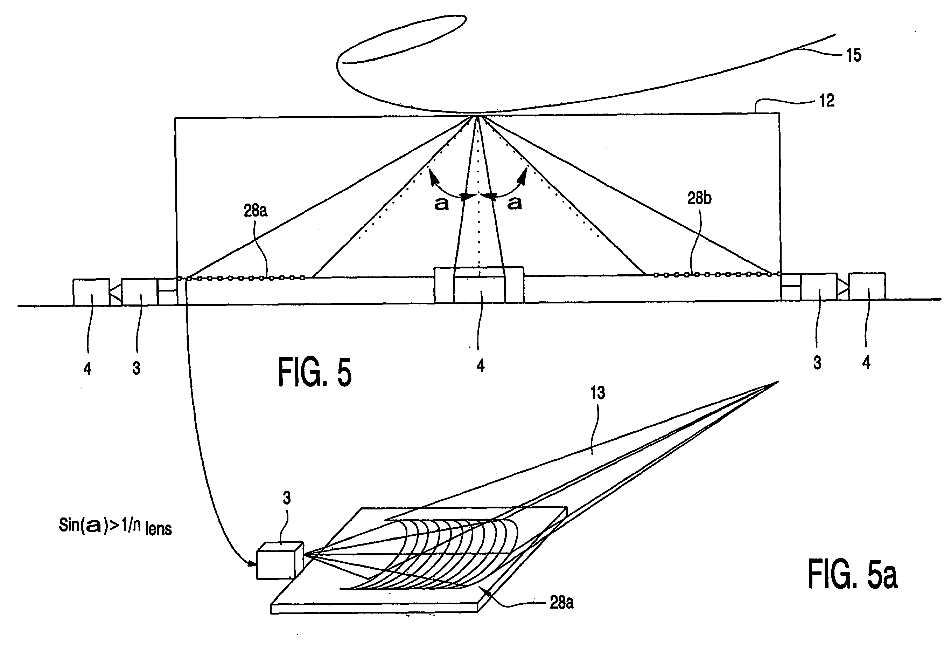

In the exemplary embodiment of the invention illustrated schematically in Figure 4 of the drawings, diffraction grating or Fresnel structures are appropriately placed to achieve the desired angle of incidence, and in the exemplary embodiment of the invention illustrated schematically in Figure 5 of the drawings, appropriately placed wave guiding/diffracting elements in the form of planar wave guide with focusing grating couplers 28a, 28b are used to achieve the desired angle of incidence. The operation of the wave guides with focusing couplers 28a, 28b can be seen more clearly in the detail diagram provided in Figure 5a of the drawings.

In all cases described above, the laser diodes used are edge-emitting diodes, which are fairly conducive to the provision of a compact design. However, the use of edge-emitting lasers is not essential to the present invention, and the optical means used to provide the desired angle of incidence of the measuring beam may be adjusted according to the type of radiation source employed.

In all cases, it is beneficial for the upper surface of the transparent window 12 to be concave in at least one of two mutually perpendicular directions. In the event that the transparent window is, say, flat, dust and dirt particles may gather on the window and especially on its central part, where the measuring beam(s) should pass. This dust and dirt may have an impact on the measuring beam(s) and thus may influence the measurement results, which is obviously undesirable. In addition, a small amount of dust, dirt or grease may cause scattering of the measuring beam, thereby undermining the total internal reflection, and permitting a small amount of light to pass through the window. If the window has a convex surface shape, in at least one direction, it can be kept clean, especially in its central part where the measuring beam passes, as described in more detail in International Patent Application WO 02/37411 A1 (Koninklijke Philips Electronics N.V. 10 May 2002.

As indicated above, a second aspect of the present invention relates to a portable optical device including a relative movement sensor of the type described above, the device further comprising a second transparent window, and means for causing at least a portion of the measuring beam to be output from the device through the second transparent window so as to provide a laser pointing function.

The optical input device described in International Patent Application No. 02/37410 may be employed, for example, as a compact, laser-based scrolling device or integrated optical micro-mouse without mechanical moving parts in mobile telephones, PDA's and the like. The second aspect of the present invention proposes the use of the laser diode(s) of the optical input device not only as the light source for the input device, but also such that at least part of the laser light emitted therefrom can be used to provide a laser pointing function in the device, at (almost) no additional manufacturing cost.

This may be achieved by collimating (part of) the non-scattered light with, for example, a plastic curved optical surface that may be integrated on the side of the optical input device lens. The collimated laser beam may then be emitted from a separate window in, for example, a mobile telephone or the like, to be used as a laser pointing function or to project messages or images using diffractive patterns in the beam.

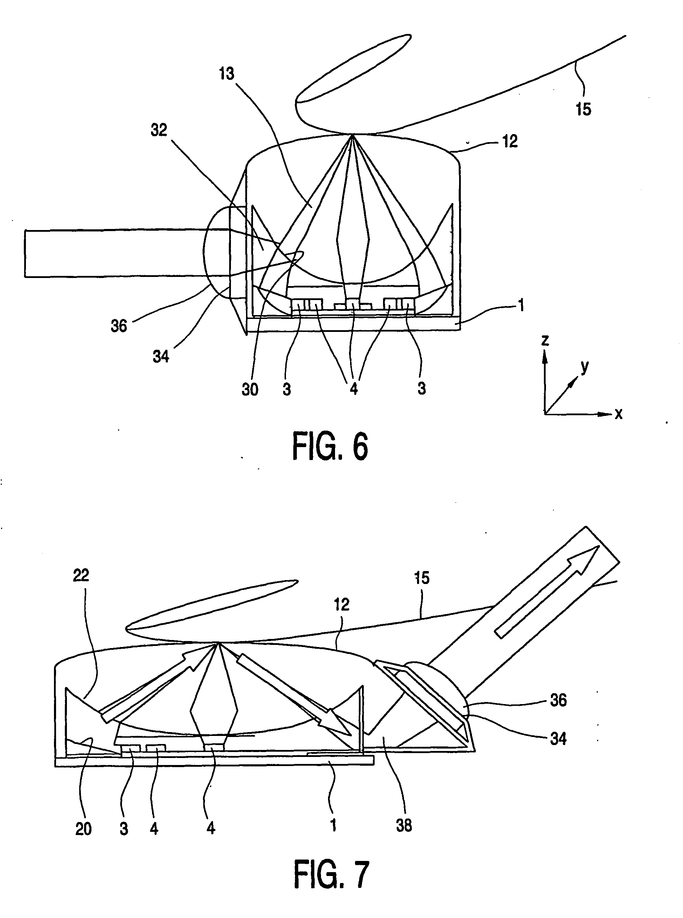

Referring to Figure 6 of the drawings, in a first exemplary embodiment of the second aspect of the present invention, light coming directly from the laser diode 3 may be split by beam splitting means 30 into two beams: a measuring beam 13 for the optical input device, and another beam 32 which is collimated (at 34) and output through a second transparent window 36.

Referring to Figure 7 of the drawings, in an alternative exemplary embodiment of the second aspect of the present invention, the angle of incidence of the measuring beam may be such that, in the absence of an object in contact with the first transparent window, the measuring beam is substantially totally internally reflected by the first transparent window, as in the case of the first aspect of the present invention, as described in detail above. Any one of the designs described with reference to Figures 2, 3, 4 or 5, or any other alternative design as will be apparent to a person skilled in the art, may be used to achieve this effect. The reflected measuring beam can then be directed (by, for example, a reflective element 38) to the second transparent window 36 to be output therethrough.

In one embodiment, infra-red laser may be used. However, alternatively, red, green, blue or other colored laser diodes may be used to enhance the visual effect, if desired.

Means (not shown) are preferably provided for selectively preventing the output of radiation through the second transparent window, as desired. In its simplest form, such means may comprise a shutter or similar mechanical means for blocking the radiation path from the second transparent window. In another embodiment, a variable focus lens or "electrowetted" lens (such as that described in International Patent Application WO 03/069380 A1 (Koninklijke Philips Electronics N.V. 21 August 2003 ) may be employed, whereby the lens selectively either focuses the laser for effecting the optical input device function or it focuses it towards, for example, a collimator lens for output through the second transparent window so as to provide, for example, a laser pointing function or enable messages or images to be projected using diffractive patterns in the beam.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A relative movement sensor for measuring movement of an object (15) and said sensor relative to each other, the sensor comprising a transparent window (12) and at least one laser (3), having a laser cavity, for generating a measuring beam (13) and illuminating an object (15) therewith through said transparent window (12) when said object is in contact with a surface of said transparent window (12), wherein at least some of the measuring beam radiation reflected by said object (15) re-enters said laser cavity, the apparatus further comprising measuring means (4) for measuring changes in operation of said laser cavity caused by interference of reflected measuring beam radiation re-entering said laser cavity and the optical wave in said laser cavity, wherein the angle of incidence (α) of said measuring beam (13) on said transparent window (12) and the refractive index of said transparent window (12) are such as to cause at least a significant proportion of said measuring beam radiation incident on said transparent window (12) to be substantially totally internally reflected thereby in the absence of an object (15) in contact therewith.

2. A sensor according to claim 1, wherein at least 50% of said measuring beam incident on said transparent window (12) is substantially totally internally reflected thereby in the absence of an object in contact therewith.

3. A sensor according to claim 3, wherein at least 90% of said measuring beam radiation incident on said transparent window (12) is substantially internally reflected thereby in the absence of an object in contact therewith.

4. A sensor according to any one of claims 1 to 3, wherein said angle of incidence (α) of said measuring beam (13) on said transparent window (12) is such that sin(α)>1/nₗₑₙₛ, where nₗₑₙₛ is the refractive index of the transparent window (12).

5. A sensor according to any one of claims 1 to 4, wherein the angle of incidence (α) of the measuring beam (13) on the transparent window (12) is at least partially set by the location of said laser (3) relative to said transparent window (12).

6. A sensor according to any one of claims 1 to 5, wherein the angle of incidence (α) of the measuring beam (13) on the transparent window (12) is at least partially achieved by the provision of one or more reflective elements (20) located in the radiation path of said measuring beam (13).

7. A sensor according to claim 6, wherein said one or more reflective elements comprise at least one mirror (20).

8. A sensor according to any one of the preceding claims, wherein the angle of incidence (α) of the measuring beam (13) on the transparent window (12) is at least partially achieved by the provision of one or more refractive elements (22,24a, 24b) located in the radiation path of said measuring beam (13).

9. A sensor according to any one of the preceding claims, wherein the angle of incidence (α) of the measuring beam (13) on the transparent window (12) is at least partially achieved by the provision of one or more diffractive elements (26a, 26b) located in the radiation path of said measuring beam (13).

10. A sensor according to claim 9, wherein said one or more diffractive elements comprise at least one diffraction grating (26a, 26b).

11. A sensor according to any one of the preceding claims, wherein the angle of incidence (α) of the measuring beam (13) on the transparent window (12) is at least partially achieved by the provision of one or more wave guiding elements with focusing couplers (28a, 28b) located in the radiation path of said measuring beam.

12. A sensor according to claim 11, wherein the one or more wave guiding elements comprise at least one focussing grating coupler (28a, 28b).

13. A sensor according to any one of the preceding claims, further comprising optical means (10) for converging said measuring beam (13) in an action plane, wherein the upper surface of the transparent window (12) is convex in at least one of two mutually perpendicular directions in the action plane on top of the transparent window (12).

14. An optical input device including a sensor according to any one of the preceding claims.

15. A method of measuring movement of an object (15) and a sensor relative to each other, the sensor comprising a transparent window (12) and at least one laser (3), having a laser cavity, for generating a measuring beam (13) and illuminating an object (15) therewith through said transparent window (12) when said object (15) is in contact with a surface of said transparent window (12), wherein at least some of the measuring beam radiation reflected by said object (15) re-enters said laser cavity, the method comprising means (4) for measuring changes in operation of said laser cavity caused by interference of reflected measuring beam radiation re-entering said laser cavity and the optical wave in said laser cavity, wherein the angle of incidence (α) of said measuring beam (13) on said transparent window (12) and the refractive index of said transparent window (12) are such as to cause at least a significant proportion of said measuring beam radiation incident on said transparent window (12) to be substantially totally internally reflected thereby in the absence of an object (15) in contact therewith.

16. A method of manufacturing a sensor according to any one of claims 1 to 13, comprising arranging a laser (3), having a laser cavity, relative to an inner surface of a transparent window (12) so as to generate a measuring beam (13) for illuminating an object (15) therewith through said transparent window (12) when an object (15) is in contact with an upper surface of said transparent window (12), wherein at least some of the measuring beam radiation reflected by said object (15) re-enters said laser cavity, the method further comprising providing measuring means (4) for measuring changes in operation of said laser cavity caused by interference of reflected measuring beam radiation re-entering said laser cavity and the optical wave in said laser cavity, and selecting the angle of incidence (α) of said measuring beam (13) on said transparent window (12) and the refractive index of said transparent window (12) so as to cause at least a significant proportion of said measuring beam radiation incident on said inner surface of said transparent window (12) to be substantially totally internally reflected thereby in the absence of an object (15) in contact therewith.

17. A portable optical device comprising a relative movement sensor according to claim 1 and the device further comprising a second transparent window (36), and means for causing at least a portion of said measuring beam to be output from said device through said second transparent window (36).

18. A device according to claim 17, further comprising beam splitting means (30) for causing some of said measuring beam (13) to be directed toward said first transparent window (12) and some of said measuring beam (13) to be directed toward said second transparent window (36).

19. A device according to claim 17, wherein at least a portion of the radiation emitted from said laser (3) reflected from said first transparent window (12) is directed toward said second transparent window (36) for output therethrough.

20. A device according to claim 19, wherein the angle of incidence (α) of said measuring beam (13) on said first transparent window (12) and/or the refractive index of said first transparent window (12) are such as to cause said measuring beam radiation incident on said first transparent window (12) to be substantially totally internally reflected thereby in the absence of an object (15) in contact therewith, following which total internal reflection said measuring beam is directed toward said second transparent window (36).

21. A device according to claim 19 or claim 20, wherein said at least a portion of said measuring beam is directed toward said second transparent window (36) via collimating means (34), following reflection thereof by said first transparent window (12).

22. A device according to any one of claims 19 to 21, wherein said angle of incidence (α) of said measurement beam (13) on said first transparent window (12) is such that sin(α)>1/nₗₑₙₛ, where nₗₑₙₛ is the refractive index of the first transparent window (12).

23. A device according to any one of the preceding claims, wherein said measuring beam (13) comprises infra-red, blue or green laser light

## Patentansprüche

1. Relativbewegungssensor zur Messung der Bewegung eines Objektes (15) und des genannten Sensors gegenüber einander, wobei der Sensor ein transparentes Fenster (12) und wenigstens einen Laser (3) mit einem Laserhohlraum aufweist, und zwar zum Erzeugen eines Messstrahlungsbündels (13) und zum Beleuchten eines Objektes (15) damit durch das genannte transparente Fenster (12) hindurch, wenn das genannte Objekt mit einer Oberfläche des transparenten Fensters (12) in Berührung ist, wobei wenigstens ein Teil der an dem genannten Objekt (15) reflektierten Messbündelstrahlung wieder in den genannten Laserhohlraum eintritt, wobei die Einrichtung weiterhin Messmittel (4) aufweist zum Messen von Änderungen im Betrieb des genannten Laserhohlraums, verursacht durch Interferenz reflektierter Messbündelstrahlung, die wieder in den Laserhohlraum eintritt und durch die optische Welle in dem genannten Laserhohlraum, wobei der Auftreffwinkel (α) des genannten Messstrahlenbündels (13) an dem genannten transparenten Fenster (12) und die Brechzahl des genannten transparenten Fensters (12) derart sind, dass wenigstens ein wesentlicher Teil der genannten auf das genannte transparente Fenster (12) auftreffenden Messbündelstrahlung beim Fehlen eines das Fenster berührenden Objektes (15) im Wesentlichen total reflektiert wird.

2. Sensor nach Anspruch 1, wobei wenigstens 50% des genannten auf das genannte transparente Fenster (12) auftreffenden Messstrahlungsbündels beim Fehlen eines Objektes in Berührung mit dem Fenster im Wesentlichen total reflektiert werden.

3. Sensor nach Anspruch 3, wobei wenigstens 90% des genannten auf das genannte transparente Fenster (12) auftreffenden Messstrahlungsbündels beim Fehlen eines Objektes in Berührung mit dem Fenster im Wesentlichen total reflektiert werden.

4. Sensor nach einem der vorstehenden Ansprüche, wobei der genannte Auftreffwinkel (α) des genannten Messstrahlenbündels (13) an dem genannten transparenten Fenster (12) derart ist, dass sind(α)>1/nₗₑₙₛ ist, wobei nₗₑₙₛ die Brechzahl des transparenten Fensters (12) ist.

5. Sensor nach einem der vorstehenden Ansprüche, wobei der Auftreffwinkel (α) des Messstrahlenbündels (13) an dem transparenten Fenster (12) wenigstens teilweise durch die Lage des genannten Lasers (3) gegenüber dem genannten transparenten Fenster (12) bestimmt wird.

6. Sensor nach einem der vorstehenden Ansprüche, wobei der Auftreffwinkel (α) des Messstrahlenbündels (13) an dem genannten transparenten Fenster wenigstens teilweise durch die Anordnung eines oder mehrerer reflektierender Elemente (20) in dem Strahlungsweg des genannten Messstrahlenbündels erreicht wird.

7. Sensor nach Anspruch 6, wobei das genannte eine reflektierende Element oder mehrere reflektierende Elemente wenigstens einen Spiegel (20) umfasst bzw. umfassen.

8. Sensor nach einem der vorstehenden Ansprüche, wobei der Auftreffwinkel (α) des Messstrahlenbündels (13) an dem transparenten Fenster (12) wenigstens teilweise durch die Anordnung eines reflektierenden Elementes oder mehrerer reflektierender Elemente (22, 24a, 24b) in dem Strahlungsweg des genannten Messstrahlenbündels (13) erreicht wird.

9. Sensor nach einem der vorstehenden Ansprüche, wobei der Auftreffwinkel (α) des Messstrahlenbündels (13) an dem transparenten Fenster (12) wenigstens teilweise durch die Anordnung eines lichtbrechenden Elementes oder mehrerer lichtbrechender Elemente (26a, 26b) in dem Strahlungsweg des genannten Messstrahlenbündels (13) erreicht wird.

10. Sensor nach Anspruch 9, wobei das genannte eine lichtbrechende Element oder mehrere lichtbrechende Elemente wenigstens ein lichtbrechendes Gitter (26a, 26b) umfasst bzw. umfassen.

11. Sensor nach einem der vorstehenden Ansprüche, wobei der Auftreffwinkel (α) des Messstrahlenbündels (13) an dem transparenten Fenster (12) wenigstens teilweise durch die Anordnung eines Wellenleiterelementes oder mehrerer Wellenleiterelemente mit Fokussierkopplem (28a, 28b) in dem Strahlungsweg des genannten Messstrahlenbündels erreicht wird.

12. Sensor nach Anspruch 11, wobei das eine Wellenleiterelement oder mehrere Wellenleiterelemente wenigstens einen fokussierenden Gitterkoppler (28a, 28b) umfasst bzw. umfassen.

13. Sensor nach einem der vorstehenden Ansprüche, der weiterhin optische Mittel (10) zum Konvergieren des genannten Messstrahlenbündels (13) zu einer Aktionsebene aufweist, wobei die obere Fläche des transparenten Fensters (12) in wenigstens einer von zwei senkrecht aufeinander stehenden Richtungen in der Aktionsebene oben auf dem transparenten Fenster (12) konvex ist.

14. Optische Eingabeeinrichtung mit einem Sensor nach einem der vorstehenden Ansprüche.

15. Verfahren zum Messen der Bewegung eines Objektes (15) und eines Sensors gegenüber einander, wobei der Sensor ein transparentes Fenster (12) und wenigstens einen Laser (3) mit einem Laserhohlraum aufweist, und zwar zum Erzeugen eines Messstrahlenbündels (13) und zum Beleuchten eines Objektes (15) durch das genannte transparente Fenster (12) hindurch, wenn das genannte Objekt (15) eine Oberfläche des genannten transparenten Fensters (12) berührt, wobei wenigstens ein Teil der an dem genannten Objekt (15) reflektierten Messbündelstrahlung wieder in den genannten Laserhohlraum eintritt, wobei das Verfahren Messmittel (4) aufweist zum Messen von Änderungen im Betrieb des genannten Laserhohlraums, verursacht durch Interferenz reflektierter Messbündelstrahlung, die wieder in den Laserhohlraum eintritt und durch die optische Welle in dem genannten Laserhohlraum, wobei der Auftreffwinkel (α) des genannten Messstrahlenbündels (13) an dem genannten transparenten Fenster (12) und die Brechzahl des genannten transparenten Fensters (12) derart sind, dass wenigstens ein wesentlicher Teil der genannten auf das genannte transparente Fenster (12) auftreffenden Messbündelstrahlung beim Fehlen eines das Fenster berührenden Objektes (15) im Wesentlichen total reflektiert wird.

16. Verfahren zum Herstellen eines Sensors nach einem der Ansprüche 1 bis 13, wobei das Verfahren die nachfolgenden Verfahrensschritte umfasst: das Anordnen eines Lasers (3) mit einem Laserhohlraum, gegenüber einer inneren Fläche eines transparenten Fensters (12), und zwar zum Erzeugen eines Messstrahlenbündels (13) zum Beleuchten eines Objektes (15) durch das genannte transparente Fenster (12) hindurch, wenn ein Objekt (15) eine obere Fläche des genannten transparenten Fensters (12) berührt, wobei wenigstens ein Teil der an dem genannten Objekt (15) reflektierten Strahlung des Messstrahlenbündels wieder in den genannten Laserhohlraum eintritt, wobei das Verfahren weiterhin den nachfolgenden Verfahrensschritt umfasst: das Anordnen von Messmitteln (4) zum Messen von Änderungen im Betrieb des genannten Laserhohlraums, verursacht durch Interferenz reflektierter Messbündelstrahlung, die wieder in den Laserhohlraum eintritt und durch die optische Welle in dem genannten Laserhohlraum, sowie das Selektieren des Auftreffwinkels (α) des genannten Messstrahlenbündels (13) an dem genannten transparenten Fenster (12) und der Brechzahl des genannten transparenten Fensters (12) derart, dass wenigstens ein wesentlicher Teil der genannten auf die genannte innere Fläche des genannten transparenten Fensters (12) auftreffenden Messbündelstrahlung beim Fehlen eines das Fenster berührenden Objektes (15) im Wesentlichen total reflektiert wird.

17. Tragbare optische Einrichtung mit einem Relativbewegungssensor nach Anspruch 1, wobei die Einrichtung weiterhin ein zweites transparentes Fenster (36) und Mittel aufweist, die dafür sorgen, dass wenigstens ein Teil des genannten Messstrahlenbündels durch das genannte zweite transparente Fenster (36) hindurch von der Einrichtung ausgeliefert wird.

18. Einrichtung nach Anspruch 17, weiterhin mit Strahlenbündelspaltmitteln (30), damit dafür gesorgt wird, dass ein Teil des genannten Messstrahlenbündels (13) auf das genannte erste transparente Fenster (12) und ein Teil des genannten Messstrahlenbündels (13) auf das genannte zweite transparente Fenster (36) gerichtet wird.

19. Einrichtung nach Anspruch 17, wobei wenigstens ein Teil der von dem genannten Laser (3) emittierten Strahlung, der an dem genannten ersten transparenten Fenster (12) reflektiert wird, auf das genannte zweite transparente Fenster (36). und zwar zur Ausgabe durch dasselbe hindurch, gerichtet wird.

20. Einrichtung nach Anspruch 19, wobei der Auftreffwinkel (α) des genannten Messstrahlenbündels (13) auf das genannte erste transparente Fenster (12) und/oder die Brechzahl des genannten ersten transparenten Fensters (12) derart sind, dass dafür gesorgt wird, dass die auf das genannte erste transparente Fenster (12) auftreffende genannte Messbündelstrahlung beim Fehlen eines das Fenster berührenden Objektes (15) im Wesentlichen total reflektiert wird, wonach das genannte Messstrahlungsbündel danach auf das genannte zweite transparente Fenster (36) gerichtet wird.

21. Einrichtung nach Anspruch 19 oder Anspruch 20, wobei der genannte wenigstens eine Teil des genannten Messstrahlenbündels über Einstellmittel (34) auf das genannte zweite transparente Fenster (36) gerichtet werden kann, und zwar nach Reflektion des genannten Teils an dem genannten ersten transparenten Fenster (12).

22. Einrichtung nach einem der Ansprüche 19 bis 21, wobei der genannte Auftreffwinkel (α) des genannten Messstrahlenbündels (13) auf das genannte erste transparente Fenster (12) derart ist, dass sin(α) > 1/nₗₑₙₛ ist, wobei nₗₑₙₛ die Brechzahl des ersten transparenten Fensters (12) ist.

23. Einrichtung nach einem der vorstehenden Ansprüche, wobei das genannte Messstrahlenbündel (13) IR-, blaues oder grünes Laserlicht aufweist.

## Revendications

1. Capteur de mouvement relatif pour mesurer le mouvement d'un objet (15) et dudit capteur l'un par rapport à l'autre, le capteur comprenant une fenêtre transparente (12) et au moins un laser (3) ayant une cavité laser pour générer un faisceau de mesure (13) et pour éclairer un objet (15) avec celui-ci à travers ladite fenêtre transparente (12) lorsque ledit objet est en contact avec une surface de ladite fenêtre transparente (12), dans lequel au moins une certaine partie du rayonnement du faisceau de mesure qui est réfléchi par ledit objet (15) rentre dans ladite cavité laser, l'appareil comprenant en outre des moyens de mesure (4) pour mesurer des changements du fonctionnement de ladite cavité laser qui sont provoqués par des interférences du rayonnement du faisceau de mesure réfléchi rentrant dans ladite cavité laser et de l'onde optique dans ladite cavité laser, dans lequel l'angle d'incidence (α) dudit faisceau de mesure (13) sur ladite fenêtre transparente (12) et l'indice de réfraction de ladite fenêtre transparente (12) sont tels de manière à provoquer au moins une proportion significative dudit rayonnement du faisceau de mesure qui est incident sur ladite fenêtre transparente (12) de manière à être réfléchi de ce fait d'une manière interne sensiblement totale en absence d'un objet (15) qui est en contact avec celui-ci.

2. Capteur selon la revendication 1, dans lequel au moins 50% dudit rayonnement du faisceau de mesure qui est incident sur ladite fenêtre transparente (12) est de ce fait réfléchi d'une manière interne sensiblement totale en absence d'un objet qui est en contact avec celui-ci.

3. Capteur selon la revendication 3, dans lequel au moins 90% dudit rayonnement du faisceau de mesure qui est incident sur ladite fenêtre transparente (12) est de ce fait réfléchi d'une manière interne sensiblement totale en absence d'un objet qui est en contact avec celui-ci.

4. Capteur selon l'une quelconque des revendications précédentes 1 à 3, dans lequel ledit angle d'incidence (α) dudit faisceau de mesure (13) sur ladite fenêtre transparente (12) est tel de façon que sin(α)>1/nₗₑₙₛₜᵢₗₗₑ où nₗₑₙₜᵢₗₗₑ est l'indice de réfraction de la fenêtre transparente (12).

5. Capteur selon l'une quelconque des revendications précédentes 1 à 4, dans lequel l'angle d'incidence (α) du faisceau de mesure (13) sur la fenêtre transparente (12) est au moins partiellement réglé par l'emplacement dudit laser (3) par rapport à ladite fenêtre transparente (12).

6. Capteur selon l'une quelconque des revendications précédentes 1 à 5, dans lequel l'angle d'incidence (α) du faisceau de mesure (13) sur la fenêtre transparente (12) est au moins partiellement obtenu par l'application d'un ou de plusieurs éléments de réflexion (20) qui se situent dans le trajet de rayonnement dudit faisceau de mesure (13).

7. Capteur selon la revendication 6, dans lequel ledit un ou lesdits plusieurs éléments de réflexion comprennent au moins un miroir (20).

8. Capteur selon l'une quelconque des revendications précédentes 1 à 7, dans lequel l'angle d'incidence (α) du faisceau de mesure (13) sur la fenêtre transparente (12) est au moins partiellement obtenu par l'application d'un ou de plusieurs éléments de réfraction (22, 24a, 24b) qui se situent dans le trajet de rayonnement dudit faisceau de mesure (13).

9. Capteur selon l'une quelconque des revendications précédentes 1 à 8, dans lequel l'angle d'incidence (α) du faisceau de mesure (13) sur la fenêtre transparente (12) est au moins partiellement obtenu par l'application d'un ou de plusieurs éléments de diffraction (26a, 26b) qui se situent dans le trajet de rayonnement dudit faisceau de mesure (13).

10. Capteur selon la revendication 9, dans lequel ledit un ou lesdits plusieurs éléments de diffraction comprennent au moins un réseau de diffraction (26a, 26b).

11. Capteur selon l'une quelconque des revendications précédentes 1 à 10, dans lequel l'angle d'incidence (α) du faisceau de mesure (13) sur la fenêtre transparente (12) est au moins partiellement obtenu par l'application d'un ou de plusieurs éléments de guidage d'onde avec des coupleurs de focalisation (28a, 28b) qui se situent dans le trajet de rayonnement dudit faisceau de mesure.

12. Capteur selon la revendication 11, dans lequel l'un ou les plusieurs éléments de guidage d'onde comprennent au moins un coupleur de réseau de focalisation (28a, 28b).

13. Capteur selon l'une quelconque des revendications précédentes 1 à 12, comprenant en outre des moyens optiques (10) pour faire converger ledit faisceau de mesure (13) dans un plan d'action dans lequel la surface supérieure de la fenêtre transparente (12) est convexe dans au moins une des deux directions mutuellement perpendiculaires dans le plan d'action en haut de la fenêtre transparente (12).

14. Dispositif d'entrée optique comprenant un capteur selon l'une quelconque des revendications précédentes 1 à 13.

15. Procédé de mesure du mouvement d'un objet (15) et d'un capteur l'un par rapport à l'autre, le capteur comprenant une fenêtre transparente (12) et au moins un laser (3) ayant une cavité laser pour générer un faisceau de mesure (13) et pour éclairer un objet (15) avec celui-ci à travers ladite fenêtre transparente (12) lorsque ledit objet (15) est en contact avec une surface de ladite fenêtre transparente (12), dans lequel au moins une certaine partie du rayonnement du faisceau de mesure qui est réfléchi par ledit objet (15) rentre dans ladite cavité laser, le procédé comprenant en outre des moyens (4) pour mesurer des changements du fonctionnement de ladite cavité laser qui sont provoqués par des interférences du rayonnement du faisceau de mesure réfléchi rentrant dans ladite cavité laser et de l'onde optique dans ladite cavité laser, dans lequel l'angle d'incidence (α) dudit faisceau de mesure (13) sur ladite fenêtre transparente (12) et l'indice de réfraction de ladite fenêtre (12) sont tels de manière à provoquer au moins une proportion significative dudit rayonnement du faisceau de mesure qui est incident sur ladite fenêtre transparente (12) de manière à être réfléchi de ce fait d'une manière interne sensiblement totale en absence d'un objet (15) qui est en contact avec celui-ci.

16. Procédé de fabrication d'un capteur selon l'une quelconque des revendications précédentes 1 à 13, comprenant le montage d'un laser (3) ayant une cavité laser par rapport à une surface intérieure d'une fenêtre transparente (12) de manière à générer un faisceau de mesure (13) pour éclairer un objet (15) avec celui-ci à travers ladite fenêtre transparente (12) lorsqu'un objet (15) est en contact avec une surface supérieure de ladite fenêtre transparente (12), dans lequel au moins une certaine partie du rayonnement du faisceau de mesure qui est réfléchi par ledit objet (15) rentre dans ladite cavité laser, le procédé comprenant en outre l'application des moyens de mesure (4) pour mesurer des changements du fonctionnement de ladite cavité laser qui sont provoqués par des interférences du rayonnement du faisceau de mesure réfléchi rentrant dans ladite cavité laser et de ladite onde optique dans ladite cavité laser, et pour sélectionner l'angle d'incidence (α) dudit faisceau de mesure (13) sur ladite fenêtre transparente (12) et l'indice de réfraction de ladite fenêtre (12) de manière à provoquer au moins une proportion significative dudit rayonnement du faisceau de mesure qui est incident sur ladite surface intérieure de ladite fenêtre transparente (12) de manière à être réfléchi de ce fait d'une manière interne sensiblement totale en absence d'un objet (15) qui est en contact avec celui-ci.

17. Dispositif optique portable comprenant un capteur de mouvement relatif selon la revendication 1 et le dispositif comprenant en outre une deuxième fenêtre transparente (36) et des moyens pour effectuer qu'au moins une partie dudit faisceau de mesure est transmise à partir dudit dispositif à travers ladite deuxième fenêtre transparente (36).

18. Dispositif selon la revendication 17, comprenant en outre des moyens de division de faisceau (30) pour effectuer qu'une certaine partie dudit faisceau de mesure (13) est dirigée vers ladite première fenêtre transparente (12) et qu'une certaine partie dudit faisceau de mesure (13) est dirigée vers ladite deuxième fenêtre transparente (36).

19. Dispositif selon la revendication 17, dans lequel au moins une partie du rayonnement étant émis à partir dudit laser (3) qui est réfléchie à partir de ladite première fenêtre transparente (12) est dirigée vers ladite deuxième fenêtre transparente (36) afin d'être transmise à travers celle-ci.

20. Dispositif selon la revendication 19, dans lequel l'angle d'incidence (α) dudit faisceau de mesure (13) sur ladite première fenêtre transparente (12) et/ou dans lequel l'indice de réfraction de ladite première fenêtre transparente (12) sont tels de manière à effectuer que ledit rayonnement du faisceau de mesure qui est incident sur ladite première fenêtre transparente (12) est de ce fait réfléchi de ce fait d'une manière interne sensiblement totale en absence d'un objet (15) qui est en contact avec celui-ci, après quoi la réflexion interne totale dudit faisceau de mesure est dirigée vers ladite deuxième fenêtre transparente (36).

21. Dispositif selon la revendication 19 ou selon la revendication 20, dans lequel ladite au moins une partie dudit faisceau de mesure est dirigée vers ladite deuxième fenêtre transparente (36) par le biais de moyens de collimation, après la réflexion de celle-ci par ladite première fenêtre transparente (12).

22. Dispositif selon l'une quelconque des revendications précédentes 19 à 21, dans lequel ledit angle d'incidence (α) dudit faisceau de mesure (13) sur ladite fenêtre transparente (12) est tel de façon que sin(α)>1/nₗₑₙₜᵢₗₗₑ où nₗₑₙₜᵢₗₗₑ est l'indice de réfraction de la première fenêtre transparente (12).

23. Dispositif selon l'une quelconque des revendications précédentes 1 à 22, dans lequel ledit faisceau de mesure (13) comprend de la lumière laser infrarouge, bleue ou verte.
